(19) Europäisches Patentamt
European Patent Office
Office européen des brevets

(11) **EP 4 400 986 A1**

(12) **EUROPÄISCHE PATENTANMELDUNG**

(43) Veröffentlichungstag:
**17.07.2024 Patentblatt 2024/29**

(21) Anmeldenummer: **24151766.3**

(22) Anmeldetag: **15.01.2024**

(51) Internationale Patentklassifikation (IPC):
***G06F 16/953*** (2019.01)        ***G06Q 50/10*** (2012.01)

(52) Gemeinsame Patentklassifikation (CPC):
**G06F 16/953; G06Q 50/10**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **16.01.2023 DE 102023100846
16.01.2023 DE 202023100187 U**

(71) Anmelder: **index Internet und Mediaforschung
GmbH
10117 Berlin (DE)**

(72) Erfinder:
• **Hinze, Henry
13156 Berlin (DE)**
• **Marquardt, Kerstin
10245 Berlin (DE)**
• **Grenz, Jürgen
13465 Berlin (DE)**

(74) Vertreter: **Hertin und Partner
Rechts- und Patentanwälte PartG mbB
Kurfürstendamm 54/55
10707 Berlin (DE)**

(54) **SYSTEM ZUR DURCHFÜHRUNG EINER SKILLBASIERTEN SUCHE IN STELLENANZEIGEN**

(57) Die Erfindung betrifft ein System zur Durchführbarkeit einer skillbasierten Suche in Stellenanzeigen. Das System umfasst eine Recheneinheit, eine Benutzerschnittstelle und eine Anzeigenvorrichtung, wobei die Recheneinheit, die Benutzerschnittstelle und die Anzeigenvorrichtung eine Datenverbindung zueinander aufweisen. An der Benutzerschnittstelle ist ein Suchstring eingebbar, wobei die Recheneinheit dazu konfiguriert ist, dass auf Basis des Suchstrings Stellenanzeigen, welche Begriffe umfassend Skills aus dem Suchstring aufweisen, in einem Datenverwaltungssystem zu durchsuchen und anhand eines Bewertungssystems zu bewerten. Einem Anwender können hierdurch die besonders relevanten Stellenanzeigen nahegelegt werden. Weiterhin betrifft die Erfindung ein computerimplementiertes Verfahren und ein Computerprogrammprodukt für eine skillbasierte Suche.

EP 4 400 986 A1

**Beschreibung**

Die Erfindung betrifft ein System zur Durchführbarkeit einer skillbasierten Suche in Stellenanzeigen. Das System umfasst eine Recheneinheit, eine Benutzerschnittstelle und eine Anzeigenvorrichtung, wobei die Recheneinheit, die Benutzerschnittstelle und die Anzeigenvorrichtung eine Datenverbindung zueinander aufweisen. An der Benutzerschnittstelle ist ein Suchstring eingebbar, wobei die Recheneinheit dazu konfiguriert ist, dass auf Basis des Suchstrings Stellenanzeigen, welche Begriffe umfassend Skills aus dem Suchstring aufweisen, in einem Datenverwaltungssystem zu durchsuchen und anhand eines Bewertungssystems zu bewerten. Einem Anwender können hierdurch die besonders relevanten Stellenanzeigen nahegelegt werden. Weiterhin betrifft die Erfindung ein computerimplementiertes Verfahren und ein Computerprogrammprodukt für eine skillbasierte Suche.

Hintergrund und Stand der Technik

Seit jeher ist der Mensch dazu bestrebt, ein Beschäftigungsverhältnis mit einem Arbeitgeber einzugehen, um durch eine berufliche Tätigkeit einen Lebensunterhalt verdienen zu können. Hierzu soll gegen Arbeitsentgelt eine Tätigkeit ausgeübt werden, bei der es erwünscht ist, dass ein Mehrwert für den Arbeitgeber erzielt wird. Die Arbeitslosenquote schwankt typischerweise mit damit korrespondierenden sozialen, finanziellen und politischen Ereignissen einer Gesellschaft. In Relation zu anderen Ländern weist Deutschland eine vergleichsweise geringe Arbeitslosenquote auf.

Arbeitslosigkeit als solche kann negative Auswirkungen für die betroffene Person haben. So kann es sein, dass das Selbstvertrauen leidet, Gefühle der Minderwertigkeit entstehen und ein allgemeines psychisches Empfinden des Unwohlseins und der Unzufriedenheit resultiert. Auch für Familienangehörige kann die Arbeitslosigkeit einer Person Konsequenzen haben. So kann es zu Einschränkungen der möglichen Freizeitaktivitäten und des Erwerbs von Konsumgütern kommen. Daher bemühen sich die meisten Menschen darum, möglichst zeitnah einen neuen Job zu finden, nachdem sie arbeitslos geworden sind.

In den letzten Jahren haben sich die Möglichkeiten der Arbeitssuche durch das Potential der Digitalisierung gewandelt. Bevor sich das Internet für die Arbeitssuche etabliert hat, war man dazu geneigt, auf Stellenanzeigen bzw. Stellenausschreibungen von Printprodukten (z. B. aus Zeitungen) zurückzugreifen und/oder persönlich zum potentiellen Arbeitgeber zu gehen und nach einem Job anzufragen. Mittlerweile nutzen die meisten Menschen Jobbörsen aus dem Internet, bei der Stellenanzeigen von verschiedenen Unternehmen veröffentlicht werden, für die man sich bewerben kann.

Der Suche von Stellenanzeigen ist eine besondere Bedeutung beizumessen, da erst die Suche ermöglicht, für eine Person relevante Stellenanzeigen auszusuchen und anzuzeigen. Im Stand der Technik wird häufig das Prinzip der semantischen Suche angewendet. Bei der semantischen Suche untersucht ein Algorithmus anhand der Beziehungen der Wörter, Sätze und Texte eines eingegebenen Suchstrings, was der Benutzer mit seiner Suche gemeint haben könnte. Daraufhin wird versucht, die "Antwort" auf den Suchstring zu finden und sie dem Nutzer direkt anzuzeigen. Die semantische Suche erfasst die Suchergebnisse als relevant und richtig und "merkt" sich daher alle angezeigten Treffer.

Obwohl die semantische Suche viele Vorteile aufweist, geht diese auch mit Nachteilen einher, die sich ineffizient auf die Suche von Stellenanzeigen auswirken können. Das Ergebnis einer semantischen Suche kann immer nur so gut sein, wie der eingegebene Suchstring ist. Je mehr Informationen in der Suchanfrage vorliegen, desto größer ist die Wahrscheinlichkeit, dass sinnvolle Ergebnisse ermittelt und angezeigt werden. Weiterhin kann beispielsweise das "Merken" der angezeigten Ergebnisse dazu führen, dass immer wieder die gleichen Ergebnisse angezeigt werden. Demzufolge liegt im Stand der Technik ein Bedarf vor, die Suche nach Stellenanzeigen zu optimieren.

Aufgabe der Erfindung

Aufgabe der Erfindung war es, die Nachteile des Standes der Technik zu beseitigen. Insbesondere war es eine Aufgabe der Erfindung, ein System bereitzustellen, mit der eine optimale Suche nach Stellenanzeigen ermöglicht wird. Des Weiteren soll die Suche nach Stellenanzeigen besonders benutzerfreundlich durchgeführt werden können.

Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einem ersten Aspekt betrifft die Erfindung ein System zur Durchführbarkeit einer skillbasierten Suche von Stellenanzeigen umfassend eine Recheneinheit, eine Benutzerschnittstelle und eine Anzeigenvorrichtung, wobei die Recheneinheit, die Benutzerschnittstelle und die Anzeigenvorrichtung eine Datenverbindung zueinander aufweisen, dadurch gekennzeichnet, dass an der Benutzerschnittstelle ein Suchstring eingebbar ist, wobei die Recheneinheit dazu konfigurierbar (bzw. konfiguriert) ist, dass auf Basis des Suchstrings Stellenanzeigen, welche Begriffe umfassend Skills aus dem Suchstring aufweisen, in einem Datenverwaltungssystem durchsuchbar und anhand eines Bewertungssystems bewertbar sowie nach einer Bewertung anhand des Bewertungssystems an der Anzeigenvorrichtung als Suchergebnisse anzeigbar sind.

Anders ausgedrückt, betrifft die Erfindung ein System zur Durchführung einer skillbasierten Suche von Stellenanzeigen umfassend eine Recheneinheit, eine Benutzerschnittstelle und eine Anzeigenvorrichtung, wobei die Recheneinheit, die Benutzerschnittstelle und die Anzeigenvorrichtung eine Datenverbindung zueinander aufweisen, dadurch gekennzeichnet, dass die Benutzerschnittstelle dazu ausgelegt ist, einen Suchstring einzugeben, wobei die Recheneinheit dazu konfiguriert ist, dass auf Basis des Suchstrings Stellenanzeigen, welche Begriffe umfassend Skills aus dem Suchstring aufweisen, in einem Datenverwaltungssystem durchgesucht und anhand eines Bewertungssystems bewertet sowie nach einer Bewertung anhand des Bewertungssystems an der Anzeigenvorrichtung als Suchergebnisse angezeigt werden.

Die Kombination der vorliegenden Erfindungsmerkmale führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinanderstehen.

Ein besonderer Vorteil des bevorzugten Systems ist, dass auf den Aufbau einer Ontologie verzichtet werden kann. Im Stand der Technik war es hingegen üblich, eine Ontologie bereitzustellen, die dauerhaft im Rahmen einer skillbasierten Suche vorgehalten werden müsste. Dabei wird die Ontologie nur dann benötigt, wenn Stellenanzeigen mit synonymen Berufsbezeichnungen bzw. Skill aufgefunden werden sollen. Durch den Verzicht eines Aufbaus einer Ontologie kann vorteilhafterweise Speicherplatz und auch der mit der Vorhaltung der Ontologie verbundene Energieverbrauch eingespart werden.

Der durchschnittliche Fachmann weiß, dass mit einer Ontologie bevorzugt ein formal aufgebautes Modell im Bereich des Wissensmanagements gemeint ist. Eine Ontologie kann insbesondere der Integration von Informationen im Rahmen der Bereitstellung von bestimmten definierten Strukturen von Wissen, für die Organisation von Wissen und als Grundlage für automatische Vorgänge der Verarbeitung von Wissen zur Anwendung dienen. Mit herkömmlichen Mitteln des Standes der Technik wäre der Aufbau einer Ontologie notwendig, um die Suche nach ähnlichen und/oder synonymen Berufsbezeichnungen zu realisieren. Vorteilhafterweise entfällt durch das bevorzugte System der Aufwand zur Bereitstellung bzw. Erstellung einer solchen Ontologie sowie die mit der Ontologie einhergehenden Maßnahmen, wie eine regelmäßige Aktualisierung. Mithin zeichnet sich das bevorzugte System durch eine erhebliche Effizienz gegenüber dem Stand der Technik aus.

Während in Systemen des Standes der Technik eine Ontologie zur Ermittlung von ähnlichen Berufen vorgehalten wurde, musste für jede neue Stellenanzeige ermittelt werden, wo sie in dieser Ontologie ihre Entsprechung findet. Letzteres entfällt durch das bevorzugte System. Die Verarbeitung der Daten ist dadurch schneller, zudem kann Energie sowie Speicherplatz gespart werden, da diese Information nicht pro Stellenanzeige abgespeichert werden muss. Mithin wird vorteilhafterweise durch das bevorzugte System eine bessere Ausnutzung von Speicherkapazitäten ermöglicht.

Insbesondere kann bei einer sinnvollen Eingabe des Suchstrings die skillbasierte Suche zu einem Ergebnis führen. Im Kontext einer Ontologie wäre es notwendig, im Vorfeld alle Verknüpfungen möglicher sinnvoller Eingaben zu berücksichtigen. Letztere Notwendigkeit würde jedoch einen besonders hohen Speicherplatz erfordern. Durch das bevorzugte System entfällt dies jedoch, was für technische Komponenten des bevorzugten Systems, insbesondere für die Recheneinheit, besonders vorteilhaft ist.

Weiterhin kann mithilfe des bevorzugten Systems ein automatisches Clustering von Berufen, beispielsweise (jedoch nicht darauf eingeschränkt) mittels künstlicher Intelligenz, insbesondere Machine-Learning-Lösungen, erfolgen. Hierbei werden vorzugsweise Stellenanzeigen von Berufen mit ähnlichen Anforderungen in Clustern zusammengefasst, um einen Anwender Alternativen in der Anzeigenvorrichtung anzeigen zu können. Das ist bei herkömmlichen Verfahren des Standes der Technik ein sehr aufwändiger Prozess, der durch den Einsatz des bevorzugten Systems nicht angewandt werden muss. Vorzugsweise ist pro neuer Stellenanzeigenzeige immer ermittelbar und abspeicherbar, zu welchem Cluster dieser gehört.

Die künstliche Intelligenz wird hierbei als Oberbegriff eingesetzt, der mehrere Technologien umfasst, beispielsweise das Machine-Learning. Im Sinne der Erfindung bezeichnen Machine-Learning-Algorithmen (auch Machine-Learning-Lösungen) einen Teilbereich der künstlichen Intelligenz (englisch: Artificial Intelligence). Machine-Learning nutzt dabei mathematische und statistische Modelle, um aus Datenbeständen zu "lernen". Im Allgemeinen haben Machine-Learning-Algorithmen den Vorteil, dass Informationen, die für einen menschlichen Beobachter zu komplex sind, automatisch aus einem großen Datensatz extrahiert werden können.

Eine Voraussetzung zur Durchführbarkeit der skillbasierten Suche mittels des bevorzugten Systems ist, dass eine Extraktion der Skills aus den Stellenanzeigen erfolgt. Dazu liegen die Stellenanzeigen in dem Datenverwaltungssystem vor. Zur Erfassung der Skills werden vorzugsweise die Positionsbezeichnung, der Inhalt der Anzeige, das Erscheinungsdatum und ein eindeutiger Identifikator (z. B. eine Nummer) erfasst. Zur Erfassung der Skills liegt eine Mehrzahl an Optionen vor, beispielsweise über Methoden der künstlichen Intelligenz (z. B. durch Algorithmen des maschinellen Lernens. Der durchschnittliche Fachmann ist in der Lage, eine Option zur Erfassung der Skills zu wählen und diese umzusetzen.

Die Extrahierbarkeit bezeichnet bevorzugt die Möglichkeit, Skills aus Stellenanzeigen zu erkennen sowie in das Datenverwaltungssystem übertragen zu können. Mithin umfasst nach der Speicherung das Datenverwaltungssystem zu jedem Skill eine zugeordnete normalisierte Form und ein Label bzw. eine Identifikationsnummer. Es sei (erneut darauf hingewiesen, dass solche Schritte nicht einen Teil der eigentlichen skillbasierten Suche bilden, sondern im Hinblick auf die skillbasierte Suche eine Voraussetzung darstellen.

Der durchschnittliche Fachmann ist sich auch darüber bewusst, wie Stellenanzeigen in das Datenverwaltungssystem übertragbar sind, was beispielsweise (ohne darauf eingeschränkt zu sein) durch den Einsatz von Webcrawlern oder manuell (z. B. durch ein Formular) erfolgen kann.

Insgesamt wird eine erheblich Verbesserung gegenüber dem Stand der Technik erzielt, als es bis zum Zeitpunkt der Entwicklung der Erfindung möglich war. Insbesondere erzielt das bevorzugte System überraschend vorteilhafte technische Wirkungen, die über die Anzeigbarkeit der Suchergebnisse hinausgehen. Insbesondere wird vorteilhaft eine verbesserte Speichernutzung der bevorzugten Komponenten für die Bereitstellung des Systems erzielt.

Vorzugsweise dient das bevorzugte System zur Durchführbarkeit einer skillbasierte Suche von Stellenanzeigen. Mit der Formulierung "skillbasierte Suche" ist bevorzugt gemeint, dass die Recheneinheit dazu konfiguriert ist, dass eine Suche von Stellenanzeigen auf Basis von Skills (englischer Begriff von "Fähigkeiten") erfolgt. Vorteilhaft wird dazu eine im Wesentlichen vollständige Transparenz über den Stellenmarkt für einen Anwender des bevorzugten Systems geboten.

Skills bzw. Fähigkeiten bezeichnen bevorzugt Vermögen, die eine Person hat, um verschiedene Handlungen ausführen zu können. Bevorzugt können mit einem Skill Fähigkeiten gemeint sein, die eine Bedeutsamkeit für einen Beruf aufweisen. Ein Skill kann bevorzugt auch ein Beruf selbst sein, da die Ausübbarkeit eines Berufs eine Fähigkeit eines Menschen darstellt, z. B. Tischler, Schreiner, Programmierer. Unter einem Skill kann auch in einem bildungssprachlichen Sinne ein Attribut gemeint sein, beispielsweise ausgewählt aus einer Gruppe umfassend Anpassungsfähigkeit, Belastbarkeit, Charisma, Aufrichtigkeit, Flexibilität, Charisma etc.

Im Stand der Technik sind vorzugsweise semantische Suchen bevorzugt, welche die Bedeutung einer Suchanfrage in den Mittelpunkt stellen. Durch die Verwendung von Hintergrundwissen wird bei einer semantischen Suche die inhaltliche Bedeutung von Texten und Suchanfragen berücksichtigt. Semantische Suchen basieren im Wesentlichen auf Ontologien, welche jeweils das Wissen einer bestimmten Domäne abbilden. Je nach Einsatzgebiet werden Konzepte sowie relevante Beziehungen zwischen Konzepten festgehalten.

Mithilfe des bevorzugten Systems sind vorteilhaft Ontologien "on-the-fly" bereitstellbar, d. h. erst während der Sucheingabe dynamisch und vollautomatisiert. Auf Basis einer durchgeführten Positionssuche ist ermittelbar, welche Qualifikationsanforderungen, eben die Skills, typischerweise an die gesuchte Position gestellt werden. Vorteilhafterweise wird es ermöglicht, auf Basis einer Nutzersuchanfrage in Form eines Suchstrings weitere relevante Suchergebnisse zu identifizieren und anzuzeigen, ohne - wie weiter oben dargelegt, den Prozess der manuellen und/oder semi-manuellen Ontologieerstellung durchlaufen zu müssen.

Weiterhin ist es von Vorteil, dass die skillbasierte Suche neben der Positionsbezeichnung auch den Inhalt der Stellenanzeige nutzt und damit auch berücksichtigt. Suchverfahren aus dem Stand der Technik oder Ontologien beziehen sich im Gegensatz zum bevorzugten System lediglich auf die Positionsbezeichnung.

Ein weiterer Vorteil des bevorzugten Systems ist es, dass auch Skills aus Stellenanzeigen auffindbar sind, die aufgrund von Rechtschreibfehlern sonst nicht erfassbar wären. Die Stellenanzeigen mit Tippfehlern werden vorteilhafterweise aufgrund der aus den Stellenanzeigen gefunden Skills aufgefunden. Dementsprechend ist bei der Nutzung des bevorzugten Systems der Einsatz von beispielsweise Fuzzy-Suche-Algorithmen (auf Deutsch auch unter dem Ausdruck unscharfe Suche bekannt) nicht notwendig. Vorteilhafterweise werden die damit einhergehenden Nachteile durch das bevorzugte System beseitigt. Im Sinne der Erfindung bezeichnet das System eine Anordnung umfassend eine Recheneinheit, eine Benutzerschnittstelle und eine Anzeigenvorrichtung, wobei die benannten Komponenten bevorzugt eine Datenverbindung untereinander aufweisen.

Eine Recheneinheit bezeichnet bevorzugt ein beliebiges Gerät oder eine beliebige Einheit, die konfigurierbar ist, Rechenoperationen durchzuführen. Bevorzugt ist die Recheneinheit eine Datenverarbeitungseinheit, beispielsweise ein Prozessor, ein Prozessorchip, ein Mikroprozessor und/oder ein Mikrocontroller. Die Recheneinheit kann auch bevorzugt eine programmierbare Leiterplatte sein. Die Recheneinheit kann vorzugsweise auch ein computerverwendbares oder computerlesbares Medium, wie eine Festplatte, einen Direktzugriffsspeicher (RAM), einen Festwertspeicher (ROM), einen Flash-Speicher usw. umfassen. Insbesondere kann die Recheneinheit selbst bevorzugt ein Computer sein.

Mit der Formulierung "Recheneinheit dazu konfigurierbar ist" ist bevorzugt gemeint, dass, um bestimmte Rechenschritte vorzunehmen, beispielsweise eine Bewertung anhand eines Bewertungssystems vornehmen zu können, auf der Recheneinheit ein Computercode und/oder eine Software installiert ist, die bevorzugt in der Lage ist, solche Rechenoperationen durchzuführen. Die Formulierung "konfigurierbar ist" kann analog auch durch die Formulierung "konfiguriert ist" ersetzt werden.

Insbesondere ist die Recheneinheit dazu konfiguriert, dass mithilfe eines selbstlernenden Algorithmus erkennbar ist, welcher Begriff ein Skill darstellt, wobei der Kontext dieses Auftretens des Wortes sowie der Wortkontext im Allgemeinen berücksichtigt werden. Die Erkennung der Begriffe als Skills ist als Teilaspekt der Extraktion von Skills aufzufassen, jedoch nicht als Teil der eigentlichen Suche, die mittels des bevorzugten Systems ausführbar ist. Der Computercode und/oder die Software kann in einer beliebigen Programmiersprache oder einer modellbasierten Entwicklungsumgebung geschrieben sein, z. B. in C/C++, C#, Python, Objective-C, Java, Basic/VisualBasic, MATLAB, Simulink, StateFlow, LabView und/oder Assembler.

Der Computercode und/oder die Software, welche bevorzugt auf der Recheneinheit installiert ist, kann als technisches Merkmal betrachtet werden, da eine direkte physische Wirkung genutzt wird, beispielsweise die Eingabe eines Suchstrings und/oder die verbesserten Ressourcennutzung der bevorzugten Komponenten des bevorzugten Systems. Funktionsbeschreibungen des Computercodes und/oder der Software können daher als bevorzugte und definierende Ausführungsformen der Erfindung angesehen werden. Der jeweils verwendete Computercode und/oder die Software stehen dem Fachmann zur Verfügung und können entsprechend installiert werden.

Die Benutzerschnittstelle bezeichnet bevorzugt eine Vorrichtung und/oder Handlung, mit der ein Nutzer, insbesondere ein Mensch, mit dem bevorzugten System in einer Interaktion treten kann, insbesondere durch die Eingabe eines Suchstrings. Bevorzugt kann durch die Benutzerschnittstelle das Bedienen und/oder das Beobachten von einem oder mehreren Komponenten des bevorzugten Systems ermöglicht werden. Die Bereitstellung der Benutzerschnittstelle ermöglicht bevorzugt eine Bedienungsmöglichkeit von einem oder mehreren Komponenten des bevorzugten Systems. Vorzugsweise ist die Benutzerschnittstelle eine computergestützte Benutzerschnittstelle oder Benutzeroberfläche, sodass Bestandteile des bevorzugten Systems, Informationen und/oder Steuerelemente zur Verfügung gestellt sind, sodass eine Funktionsnutzung des bevorzugten Systems ermöglicht wird. Insbesondere kann die Benutzerschnittstelle, vorzugsweise eine computergestützte Benutzerschnittstelle, eine gegenständliche Benutzerschnittstelle, Gehirn-Computer-Schnittstelle, grafische Benutzeroberfläche, Kommandozeile, natürliche Benutzerschnittstelle, sprachbasierte Benutzerschnittstelle, eine wahrnehmungsgesteuerte Benutzerschnittstelle und/oder eine zeichenorientierte Benutzerschnittstelle sein.

Im Sinne der Erfindung bezeichnet eine Anzeigenvorrichtung eine Anzeige, mit der eine Anzeigbarkeit von Suchergebnissen möglich ist. Die Anzeigenvorrichtung kann bevorzugt die Suchergebnisse im Rahmen einer optischen Signalisierung darstellen. Die Anzeigenvorrichtung kann beispielsweise eine mechanische, elektromechanische, elektronische, optische oder eine elektrooptische Anzeige sein. Bevorzugt kann die Anzeigenvorrichtung ausgewählt sein aus einer optischen, akustischen und/oder taktilen Anzeige.

Vorzugsweise stehen die Recheneinheit, die Benutzerschnittstelle sowie die Anzeigenvorrichtung untereinander in einer Datenverbindung. Eine Datenverbindung meint bevorzugt eine derartige Verbindung, dass ein Austausch von Daten ermöglicht wird. Eine Datenverbindung kann vorzugsweise durch den Einsatz von Kabeln oder kabellos bereitgestellt werden, um einen Transfer von Daten zu gewährleisten.

Bevorzugt ist an bzw. in die Benutzerschnittstelle ein Suchstring eingebbar. Ein Suchstring umfasst die gesamte Eingabe in die Benutzerschnittstelle. Insbesondere kann der Suchstring als Suchbefehl aufgefasst werden. Damit umfasst ein Suchstring bevorzugt einzelne Worte, Zahlen, Phrasen und/oder Verknüpfungen, wobei bevorzugt durch Verknüpfungen angegeben wird, wie Worte, Zahlen und/oder Phrasen miteinander verknüpft sind.

Bevorzugt ist die Recheneinheit dazu konfiguriert, dass auf Basis des Suchstrings Stellenanzeigen, welche Begriffe umfassend Skills aus dem Suchstring aufweisen, in einem Datenverwaltungssystem durchsuchbar sind.

Ein Datenverwaltungssystem bezeichnet bevorzugt ein System zur Verwaltung von Daten. Vorzugsweise ist über das Datenverwaltungssystem eine Datenbank steuerbar, wobei das Datenverwaltungssystem die Datenbank umfasst. Eine Datenbank bezeichnet bevorzugt eine Sammlung von Informationen und/oder Daten, wobei die Datenbank im erfindungsgemäßen Kontext Stellenanzeigen umfasst, insbesondere Informationen und/oder Daten über Stellenanzeigen. Bevorzugt können relationale Datenbanken eingesetzt werden.

Eine Stellenanzeige ist bevorzugt bekannt als personalwirtschaftliche Ausschreibung einer organisatorischen Stelle für die Beziehung zwischen einem Arbeitgeber und einem potentiellen Arbeitnehmer.

Vorzugsweise sind die Stellenanzeigen anhand eines Bewertungssystems bewertbar. Das Bewertungssystem umfasst bevorzugt ein Qualifikationsprofil, wobei die Bewertung insbesondere die Relevanz der Stellenanzeige für den Suchstring betrifft. Im Folgenden wird die Bewertung anhand des Bewertungssystem näher ausgeführt.

Insbesondere sind Suchergebnisse nach einer Bewertung der Stellenanzeigen anhand des Bewertungssystems an der Anzeigenvorrichtung anzeigbar, wobei vorteilhafterweise nur für einen Anwender relevante Stellenanzeigen anzeigbar sind. Die Suchergebnisse bezeichnen damit die Ergebnisse, die an der Anzeigenvorrichtung einem Nutzer angezeigt werden. Vorteilhaft zeichnet sich die Darstellung der Suchergebnisse durch eine für den Nutzer optimale Relevanz sowie eine besonders übersichtliche Darstellungsweise aus.

In einer weiteren bevorzugten Ausführungsform ist das System dadurch gekennzeichnet, dass das Bewertungssystem eine Zuordnung zwischen jeweils einem Skill und einer Liste von Stellenanzeigen mit dem entsprechenden Skill und einen Score umfasst.

Vorzugsweise sind die in den Stellenanzeigen gefundenen Skills im Rahmen des Bewertungssystems nach einem oder mehreren Kriterien sortierbar. So kann es bevorzugt sein, dass die gefundenen Skills in den Stellenanzeigen nach ihrer Häufigkeit sortiert werden, sodass eine Liste bereitstellbar ist, die die Stellenanzeigen mit den meisten Skills enthält.

In einer weiteren bevorzugten Ausführungsform ist das System dadurch gekennzeichnet, dass die Recheneinheit dazu konfigurierbar ist, dass eine Suche nach Skills in der Liste von Stellenanzeigen ausführbar ist, wobei bei Auffindung einer oder mehrerer Skills eine Summe der Scores berechenbar ist.

In einer weiteren bevorzugten Ausführungsform ist das System dadurch gekennzeichnet, dass die Recheneinheit dazu konfiguriert ist, dass eine Suche nach Skills in der Liste von Stellenanzeigen ausgeführt wird, wobei bei Auffindung einer oder mehrerer Skills eine Summe der Scores berechenbar ist.

Im erfindungsgemäßen Kontext könnten bevorzugt die Ausdrücke "konfigurierbar" und "dazu konfiguriert ist" synonym verwandt werden.

Der Score kann beispielsweise eine Zahl sein, der eine Normalisierung der Häufigkeit darstellt. Beispielsweise kann der Score zwischen 0-1 liegen.

In einer weiteren bevorzugten Ausführungsform ist eine Relevanz berechenbar bzw. wird die Relevanz berechnet. Die Berechnung der Relevanz ist im Vorfeld der eigentlichen Suche skillbasierten Suche und verbessert diese, was von großem Vorteil ist.

Die Relevanz eines Skills ist bevorzugt automatisch ermittelbar. Dabei wird bevorzugt folgende Formel verwendet:

$$\text{Relevanz} = 1 - \text{„Anzahl der Stellenanzeigen, die den Skill enthalten"} / \text{„Gesamtanzahl der Stellen-Anzeigen"}.$$

Seltene Skills erhalten somit einen Wert nahe 1, während häufigere Skills einen Wert nach 0 erhalten.

Pro Skill wird vorzugsweise dann der Score als Produkt aus der Anzahl der Stellenanzeigen, die den Skill enthalten, und der vorab ermittelten Relevanz ermittelt.

Als Beispiel sei folgendes aufgeführt: Eine Suche nach "Tischler" findet die Skills "Tischler" und "Deutschkenntnisse", die in etwa gleich oft vorkommen. Da die berechnete Relevanz für "Tischler" viel höher als für "Deutschkenntnisse" ist, wird auch ein viel höherer Score ermittelt.

In einer weiteren bevorzugten Ausführungsform ist das System dadurch gekennzeichnet, dass das Bewertungssystem eine Synonymliste von Berufsbezeichnungen aufweist, wobei die Synonymliste anhand ähnlicher Skills ermittelbar ist.

Es ist bekannt, dass Berufsbezeichnungen eine Mehrzahl von Stellenanzeigen enthalten und oftmals mehrere Bezeichnungen aufweisen, die in einigen Fällen Synonyme darstellen. In anderen Fällen können die Synonyme jedoch einen völlig anderen Beruf bezeichnen. Vorteilhafterweise gelingt es mithilfe des bevorzugten Systems, dass eine besonders zielgerichtete Suche ermöglicht wird, indem nur für einen Nutzer wünschenswerte Stellenanzeigen anzeigbar sind.

Bevorzugt sind eine Liste von Bezeichnungen erstellbar und für jede dieser Bezeichnungen die typischen Skills ermittelbar. Anders ausgedrückt, wird bevorzugt eine Liste von Bezeichnungen erstellt, wobei bevorzugt für jede dieser Bezeichnungen die Skills ermittelt werden. Gibt es eine sehr hohe Überschneidung von Skills, so werden diese bevorzugt als Synonyme bewertet. Vorzugsweise wird die "hohe Überschneidung" zuvor vorgegeben, beispielsweise durch einen festgelegten Wert. Bevorzugt ist der entsprechende festgelegte Wert für die Bewertung einer "hohen Überschneidung" ein Teil der auf der Recheneinheit installierten Software. Weiterhin kann es bevorzugt sein, dass der festgelegte Wert einer Bewertung einer "hohen Überschneidung" von einem Nutzer vorgegeben wird. Vorteilhaft wird hierdurch die Individualität der Suche optimiert.

Es ist beispielsweise klar, dass ein Tischler und Schreiner im Wesentlichen ähnliche oder fast identische Skills haben. Demzufolge kann ein Schreiner daher als Synonym für einen Tischler aufgefasst werden. Hingegen teilen sich Tischler und Glaser nur wenige Skills, sodass ein Glaser nicht als Synonym für einen Tischler erachtet wird.

Die Überschneidung bezieht sich bevorzugt auf eine gemeinsame Teilmenge von Skills. So werden z. B. für die Berufe Tischler und Schreiner fast identische Skills vorausgesetzt. Die Überschneidungen lassen sich vorteilhaft aufgrund von erfassten Stellenanzeigen durch die Recheneinheit ermitteln.

Die bevorzugte Synonymliste umfasst bevorzugt Synoyme, die eine "hohe Überschneidung" aufweisen und ist besonders schnell ermittelbar.

In einer weiteren bevorzugten Ausführungsform ist das System dadurch gekennzeichnet, dass die Summe der Scores von Skills über einen vorgegebenen Schwellenwert liegt. Dadurch, dass der Schwellenwert vorgegeben werden kann, ist die skillbasierte Suche vorteilhafterweise individualisierbar. Insbesondere kann über den Schwellenwert gesteuert werden, ob die Suchergebnisse ähnliche Stellenanzeigen aufweist oder auch "verwandte Stellenanzeigen" beinhaltet. Demgegenüber müsste beispielsweise eine Ontologie neu erstellt werden, was den benötigten Speicherplatz vervielfachen würde.

Ein Schwellenwert ist vorzugsweise ein Parameter, insbesondere eine Zahl, der in gewisser Weise eine Grenze vorgibt, um eine Sortierung der besonders relevanten Stellenanzeigen vornehmen zu können.

In einer bevorzugten Ausführungsform liegt mindestens ein Skill in der bevorzugten Liste. Vorzugsweise ist ein Schwellenwert festgelegt bzw. vorgegeben, wobei bevorzugt die Summe der Scores der gefundenen Skills über einen Schwellwert liegen muss. Bevorzugt kann der Schwellenwert ebenfalls vorgegeben sein. Weiterhin kann es bevorzugt sein, dass der Schwellenwert ermittelbar im Rahmen der bevorzugten Suche des bevorzugten Systems ist. Der Schwellwert ist bevorzugt manuell nach menschlichem Ermessen festlegbar. Liegt er zu niedrig, würden auch weniger relevante Stellenanzeigen gefunden werden. Bei einem zu hohem Schwellwert würden allerdings relevante Stellenanzeigen nicht gefunden werden.

In einer weiteren bevorzugten Ausführungsform ist ein Skill in der bevorzugten Synonymliste enthalten. Die bevorzugte Suche nach Stellenanzeigen erfolgt bevorzugt auf der Basis, dass mindestens ein Skill in der erstellten Liste enthalten ist und die Summe der Scores der gefundenen Skills über einen Schwellwert liegen oder der Skill oder eine Berufsbezeichnung in der Synonymliste enthalten ist. Die zuletzt genannten Optionen stellen bevorzugt Kriterien dar, nach denen die Stellanzeigen aus dem Datenverwaltungssystem suchbar und auswählbar sind. Das Suchergebnis ist bevorzugt an der Anzeigenvorrichtung anzeigbar, wobei bevorzugt das Suchergebnis nach einem der bevorzugten Kriterien gewählt wird.

So kann es beispielsweise (nicht beschränkend gemeint) sein, dass eine Stellenanzeige für "Montagemitarbeiter (m/w/d)" mit den Skills Fenster, Einbau, Türen, Montage, Tischler und handwerklich auch eine Stellenanzeige für einen "Schreiner" gefunden wird.

Vorzugsweise ist die Recheneinheit dazu konfigurierbar, dass pro Skill die Relevanz ermittelbar ist. Bevorzugt wird dazu das Vorkommen des Skills im Verhältnis zur Gesamtheit der Stellenanzeigen betrachtet. Kommt ein Skill in wenigen Stellenanzeigen vor, so beschreibt er einen Beruf genauer als ein Vorkommen in vielen Stellenanzeigen. Die Relevanz kann bevorzugt in Form einer Zahl, vorzugsweise einer Dezimalzahl, zum Ausdruck gebracht werden.

Wie obig ausgeführt, werden Stellenanzeigen in dem Datenverwaltungssystem, bevorzugt in der Datenbank, nach der Eingabe des Suchstrings gesucht, die den Suchstring in der Berufsbezeichnung oder der Stellenanzeige enthalten. Pro gefundenem Skill wird ein Score aus der Häufigkeit des Vorkommens und der Relevanz berechnet. Hierdurch erhält ein Nutzer vorteilhaft eine Liste von typischen Skills für diesen Suchstring. Durch die Einbeziehung der Relevanz werden häufig vorkommende Skills weiter hinten eingereiht.

In einer weiteren bevorzugten Ausführungsform ist das System dadurch gekennzeichnet, dass die Stellenanzeigen aus Jobbörsen aus dem Internet bereitstellbar sind. Anders ausgedrückt, ist das System bevorzugt dadurch gekennzeichnet, dass die Stellenanzeigen aus Jobbörsen aus dem Internet bereitgestellt werden.

Vorteilhafterweise kann das Datenverwaltungssystem auf Stellenanzeigen zugreifen, die der Öffentlichkeit im Internet zur Verfügung stehen. So kann es beispielsweise möglich sein, dass Stellenanzeigen berücksichtigt werden, die auf bekannten Jobportalen ausgeschrieben sind, z. B. Stepstone, Meinestadt, Indeed, Xing und/oder Monster. Ein Nutzer erhält damit die Möglichkeit, eine breite Vielfalt an Stellenanzeigen im Rahmen der skillbasierten Suche einzuschließen.

Insbesondere ist es vorteilhafterweise möglich, dass Stellenanzeigen täglich geschaltete Stellenanzeigen aus Online-Jobbörsen, von Unternehmens-Websites sowie aus Zeitungen und/oder Zeitschriften erfasst. Diese Stellenanzeigen sind bevorzugt in mehreren Datenbanken ablegbar, die bevorzugt einen Teil des Datenverwaltungssystems bilden können.

In einer weiteren bevorzugten Ausführungsform ist das System dadurch gekennzeichnet, dass das System einen Aktualisierungsmechanismus aufweist, sodass eine Aktualisierung von den Stellenanzeigen bereitstellbar ist.

Mit dem Aktualisierungsmechanismus des bevorzugten Systems ist bevorzugt gemeint, dass die Recheneinheit derart konfigurierbar ist, dass ein aktueller Status einer Stellenanzeige abgefragt und bei der skillbasierten Suche berücksichtigt wird. Vorteilhafterweise ist das bevorzugte System damit in der Lage, einem Nutzer anzugeben, ob eine Stellenanzeige noch zur Verfügung steht oder nicht. Weiterhin ist es vorteilhaft möglich, Stellenanzeigen, die bereits vergeben sind, auch bei der Durchführung der Suche auszuschließen, sodass ein Nutzer vorteilhaft nur die freien Stellenanzeigen berücksichtigt. Mit der Aktualisierung ist bevorzugt ein aktueller Status hinsichtlich der Verfügbarkeit einer Stellenanzeige gemeint, d. h., ob eine Stellenanzeige bereits besetzt und damit tatsächlich nicht mehr ausgeschrieben ist oder weiterhin zur Verfügung steht. Insgesamt wird durch den Aktualisierungsmechanismus vorteilhafterweise eine besondere Effizienz der Ausführbarkeit der skillbasierten Suche erzielt.

In einer weiteren bevorzugten Ausführungsform ist das System dadurch gekennzeichnet, dass das System eine Kommunikationseinheit aufweist, wobei bevorzugt die Kommunikationseinheit dazu konfigurierbar ist, dass Daten empfangbar und/oder versendbar sind.

Im Sinne der Erfindung bezeichnet die Kommunikationseinheit bevorzugt eine Sende- und/oder eine Empfangseinheit. Die Kommunikationseinheit stellt bevorzugt dahingehend eine Empfangseinheit dar, dass sie Befehle für die skillbasierte Suche empfangen kann. Vorteilhaft ist es mithilfe der Kommunikationseinheit ebenfalls möglich, dass Befehle, bspw. hinsichtlich der Eingabe eine Suchstrings, empfangen werden können. Weiterhin kann die Kommunikationseinheit dahingehend eine Sendeeinheit darstellen, dass sie Daten für die skillbasierte Suche an eine externe Datenverarbeitungseinheit versenden kann. So kann es beispielsweise sein, dass die Suchergebnisse an eine externe Datenverarbeitungseinheit übersandt und dort angezeigt werden können.

Die Übertragung von Daten und/oder Informationen über die Kommunikationseinheit erfolgt bevorzugt durch gerichtete oder ungerichtete elektromagnetische Wellen, wobei der Bereich des genutzten Frequenzbands je nach Anwendung und verwendeter Technik von wenigen Hertz (Niederfrequenz) bis hin zu mehreren hundert Terahertz (sichtbares Licht) variieren kann. Bevorzugt können verschiedenste Datenübertragungswege genutzt werden, wobei beispielhaft Bluetooth, WLAN, ZigBee, Thread, RFID, NFCoder, zellulare Mobilfunknetze (insbesondere Campusnetze) im Radiofrequenzbereich sowie IrDA und optischer Richtfunk (FSO) im infraroten bzw. optischen Frequenzbereich genannt werden sollen.

Eine externe Datenverarbeitungseinheit bezeichnet im Sinne der Erfindung bevorzugt eine externe Recheneinheit, die dazu eingerichtet sein kann, Daten auszulesen, einzugeben und/oder auszuwerten. Beispielsweise kann die externe Datenverarbeitungseinheit ein PC, ein Tablet-Computer und/oder ein mobiles Endgerät, wie z. B. ein Smartphone, sein.

In einer weiteren bevorzugten Ausführungsform ist das System dadurch gekennzeichnet, dass die Recheneinheit, die Benutzerschnittstelle und die Anzeigenvorrichtung als ein Bauteil verbaut sind.

Vorteilhaft liegen hierdurch die Komponenten des bevorzugten Systems in einer besonders kompakten Bauweise vor. Hierdurch kann für den Nutzer eine besonders komfortable Benutzung des bevorzugten Systems ermöglicht werden. So kann es beispielsweise sein, die bevorzugten Komponenten des Systems in einem Smartphone und/oder einem Tablett einzubetten. Die bevorzugten Komponenten können auch Teil eines solchen Gerätes sein. Mit dem Begriff "Bauteil" ist damit vorzugsweise jede Vorrichtung gemeint, die in der Lage ist, eine Anzeigenvorrichtung, eine Benutzerschnittstelle und eine Recheneinheit aufzunehmen und/oder aufzuweisen. Vorteilhaft resultiert hierdurch ein verbesserter Gesamtüberblick auf das bevorzugte System. Weiterhin liegt eine optimale Lagerverwaltung der bevorzugten Komponenten vor.

In einer weiteren bevorzugten Ausführungsform ist das System dadurch gekennzeichnet, dass die Recheneinheit, die Benutzerschnittstelle und die Anzeigenvorrichtung als separate Komponenten vorliegen.

Demzufolge können die bevorzugten Komponenten vorteilhaft auch räumlich voneinander getrennt angeordnet sein. Vorteilhaft wird hierdurch eine höhere Flexibilität hinsichtlich der Anordnung der bevorzugten Komponenten erreicht. Des Weiteren lässt sich das bevorzugte System besonders einfach in bereits vorhandene Netzwerkstrukturen integrieren und/oder implementieren, sodass eine besonders vielfältige Anwenderfreundlichkeit gegeben ist.

In einem weiteren Aspekt betrifft die Erfindung ein computerimplementiertes Verfahren für eine skillbasierte Suche von Stellenanzeigen umfassend folgende Schritte:

a) Eingabe eines Suchstrings an einer Benutzeroberfläche,
b) Durchsuchung von Stellenanzeigen, welche Begriffe umfassend Skills aus dem Suchstring aufweisen, in einem Datenverwaltungssystem,
c) Bewertung der Stellenanzeigen anhand eines Bewertungssystems,
d) Anzeige von Suchergebnissen an einer Anzeigenvorrichtung nach der Bewertung.

Des Weiteren betrifft die Erfindung ein Computerprogrammprodukt für eine skillbasierte Suche von Stellenanzeigen, das dazu konfiguriert ist, folgende Schritte auszuführen:

a) Eingabe eines Suchstrings an einer Benutzeroberfläche,
b) Durchsuchung von Stellenanzeigen, welche Begriffe umfassend Skills aus dem Suchstring aufweisen, in einem Datenverwaltungssystem,
c) Bewertung der Stellenanzeigen anhand eines Bewertungssystems,
d) Anzeige von Suchergebnissen an einer Anzeigenvorrichtung nach der Bewertung.

Der durchschnittliche Fachmann erkennt, dass technische Merkmale, Definitionen und Vorteile des erfindungsgemäßen Systems und von bevorzugten Ausführungsformen des Systems gleichermaßen für computerimplementierte Verfahren und für das Computerprogrammprodukt für eine skillbasierte Suche von Stellenanzeigen zutreffen und umgekehrt.

**Patentansprüche**

1. System zur Durchführbarkeit einer skillbasierten Suche von Stellenanzeigen umfassend eine Recheneinheit, eine Benutzerschnittstelle und eine Anzeigenvorrichtung, wobei die Recheneinheit, die Benutzerschnittstelle und die Anzeigenvorrichtung eine Datenverbindung zueinander aufweisen,

**dadurch gekennzeichnet, dass**
an der Benutzerschnittstelle ein Suchstring eingebbar ist, wobei die Recheneinheit dazu konfiguriert ist, dass auf Basis des Suchstrings Stellenanzeigen, welche Begriffe umfassend Skills aus dem Suchstring aufweisen, in einem Datenverwaltungssystem durchsuchbar und anhand eines Bewertungssystems bewertbar sowie nach einer Bewertung anhand des Bewertungssystems an der Anzeigenvorrichtung als Suchergebnisse anzeigbar sind.

**2.** System nach dem vorherigen Anspruch
**dadurch gekennzeichnet, dass**
das Bewertungssystem eine Zuordnung zwischen jeweils einem Skill und einer Liste von Stellenanzeigen mit dem entsprechenden Skill und einen Score umfasst.

**3.** System nach einem oder mehreren der vorherigen Ansprüche
**dadurch gekennzeichnet, dass**
die Recheneinheit dazu konfiguriert ist, dass eine Suche nach Skills in der Liste von Stellenanzeigen ausführbar, wobei bei Auffindung einer oder mehrerer Skills eine Summe der Scores berechenbar ist.

**4.** System nach einem oder mehreren der vorherigen Ansprüche
**dadurch gekennzeichnet, dass**
die Summe der Scores über einen vorgegebenen Schwellenwert liegt.

**5.** System nach einem oder mehreren der vorherigen Ansprüche
**dadurch gekennzeichnet, dass**
das Bewertungssystem eine Synonymliste von Berufsbezeichnungen aufweist, wobei die Synonymliste anhand ähnlicher Skills ermittelbar ist.

**6.** System nach einem oder mehreren der vorherigen Ansprüche
**dadurch gekennzeichnet, dass**
die Stellenanzeigen aus Jobbörsen aus dem Internet und/oder Printprodukten bereitstellbar sind.

**7.** System nach einem oder mehreren der vorherigen Ansprüche
**dadurch gekennzeichnet, dass**
das System einen Aktualisierungsmechanismus aufweist, sodass eine Aktualisierung von den Stellenanzeigen bereitstellbar ist.

**8.** System nach einem oder mehreren der vorherigen Ansprüche
**dadurch gekennzeichnet, dass**
das System eine Kommunikationseinheit aufweist, wobei bevorzugt die Kommunikationseinheit dazu konfigurierbar ist, dass Daten empfangbar und/oder versendbar sind.

**9.** System nach einem oder mehreren der vorherigen Ansprüche
**dadurch gekennzeichnet, dass**
die Recheneinheit, die Benutzerschnittstelle und die Anzeigenvorrichtung als ein Bauteil oder in einem Bauteil verbaut sind.

**10.** System nach einem oder mehreren der vorherigen Ansprüche
**dadurch gekennzeichnet, dass**
die Recheneinheit, die Benutzerschnittstelle und die Anzeigenvorrichtung als separate Komponenten vorliegen.

**11.** Computerimplementiertes Verfahren für eine skillbasierte Suche von Stellenanzeigen umfassend folgende Schritte:

a) Eingabe eines Suchstrings an einer Benutzeroberfläche,
b) Durchsuchung von Stellenanzeigen, welche Begriffe umfassend Skills aus dem Suchstring aufweisen, in einem Datenverwaltungssystem,
c) Bewertung der Stellenanzeigen anhand eines Bewertungssystems,
d) Anzeige von Suchergebnissen an einer Anzeigenvorrichtung nach der Bewertung.

**12.** Computerprogrammprodukt für eine skillbasierte Suche von Stellenanzeigen, das dazu konfiguriert ist, folgende Schritte auszuführen:

a) Eingabe eines Suchstrings an einer Benutzeroberfläche,

b) Durchsuchung von Stellenanzeigen, welche Begriffe umfassend Skills aus dem Suchstring aufweisen, in einem Datenverwaltungssystem,

c) Bewertung der Stellenanzeigen anhand eines Bewertungssystems,

d) Anzeige von Suchergebnissen an einer Anzeigenvorrichtung nach der Bewertung.

Europäisches
Patentamt

European
Patent Office

Office européen
des brevets

# EUROPÄISCHER RECHERCHENBERICHT

Nummer der Anmeldung

EP 24 15 1766

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 046 059 A1 (BISCHOFF STEFAN [DE]) 20. Juli 2016 (2016-07-20) * Absätze [0007], [0052], [0080]; Abbildungen 11, 13; Tabelle 7 * ----- | 1-12 | INV. G06F16/953 G06Q50/10 |

**RECHERCHIERTE SACHGEBIETE (IPC)**

G06F
G06Q

Der vorliegende Recherchenbericht wurde für alle Patentansprüche erstellt

| Recherchenort | Abschlußdatum der Recherche | Prüfer |
|---|---|---|
| Den Haag | 23. April 2024 | Rameseder, Jonathan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 1766

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-04-2024

| Im Recherchenbericht angeführtes Patentdokument | Datum der Veröffentlichung | Mitglied(er) der Patentfamilie | Datum der Veröffentlichung |
|---|---|---|---|
| EP 3046059 A1 | 20-07-2016 | KEINE | |

Für nähere Einzelheiten zu diesem Anhang : siehe Amtsblatt des Europäischen Patentamts, Nr.12/82